# EUROPÄISCHE PATENTSCHRIFT

(11) **EP 4 016 061 B1**
(45) Veröffentlichungstag und Bekanntmachung des Hinweises auf die Patenterteilung: **27.09.2023**
(21) Anmeldenummer: 22155302.7
(22) Anmeldetag: 03.08.2017
(51) Int. Cl.: G01N 23/046

(54) **VERFAHREN ZUR BEDIENUNG EINES RÖNTGEN-SYSTEMS**
METHOD FOR OPERATING AN X-RAY SYSTEM
PROCÉDÉ DE COMMANDE D'UN SYSTÈME À RAYONS X

(30) Priorität: 03.08.2016 DE 102016214343
(43) Veröffentlichungstag der Anmeldung: 22.06.2022
(62) Teilanmeldung aus: 17748747.7
(73) Patentinhaber: Fraunhofer-Gesellschaft zur Förderung der angewandten Forschung e.V., 80686 München (DE)
(72) Erfinder: Amr, Mahmoud, 90768 Fürth (DE); Schön, Tobias, 91058 Erlangen (DE)
(74) Vertreter: Pfitzner, Hannes

(56) Entgegenhaltungen:
- WO-A1-2010/086706
- WO-A1-2014/160766
- WO-A1-2015/197566
- DE-A1-102007 005 377
- ANDREAS FISCHER ET AL: "Object Specific Trajectory Optimization for Industrial X-ray Computed Tomography", SCIENTIFIC REPORTS, Bd. 6, Nr. 1, 1. Mai 2016 (2016-05-01), XP055404799, DOI: 10.1038/srep19135

## Beschreibung

Ausführungsbeispiele der vorliegenden Erfindung beziehen sich auf ein Verfahren und ein Computerprogramm. Weitere nicht unter den Schutzumfang der Ansprüche fallende Ausführungsbeispiele beziehen sich auf eine Vorrichtung zur Bedienung eines Röntgen-Systems, wie insbesondere eines CT-Systems, und ein Röntgen- bzw. CT-System umfassend eine entsprechende Bedienvorrichtung.

Unter Zuhilfenahme von CT-Systemen (Röntgencomputertomographie-Systemen) werden Aufgaben wie die zerstörungsfreie Werkstoffprüfung realisiert. In Anwendungen wie der Eskalationsprüfung, d.h. der manuellen Prüfung, sobald der Verdacht auf kritische Fehler vorliegt, von großen Bauteilen mit unterschiedlichsten Geometrien kommt häufig die manuelle zerstörungsfreie Prüfung mittels Röntgentechnik zum Einsatz. Dabei handelt es sich in der Regel um Laborsysteme oder Portalanlagen. Der Prüfer muss dabei zum Teil komplizierte Konzepte für Halterungen entwerfen und installieren oder die Röntgenkomponenten manuell zum Prüfbereich des Bauteils (ROI) führen. Eine CT ist mit diesem Ansatz oft nicht oder nur mit schlechter Bildqualität möglich, da diese Systeme nicht genug Daten für eine 3D-Rekonstruktion erzeugen können oder die installierten Halterungen als Fremdkörper in der Rekonstruktion auftauchen. Mittels einer robotergestützten Anlage erhält ein solches System die benötigten Freiheitsgrade, jedoch ist die Bedienung solcher Systeme deutlich komplexer, d.h. eine einfache manuelle Bedienung ist meist nur mit einer starken Vereinfachung der Freiheitsgrade im System möglich. Diese Vereinfachungen verhindern wiederum das Erfassen von hinreichend vielen Daten für eine 3D-Rekonstruktion, so dass lediglich eine Durchstrahlungsprüfung möglich ist. Deshalb besteht der Bedarf nach einem verbesserten Ansatz.

Aufgabe der vorliegenden Erfindung ist es, ein verbessertes Bedienkonzept für Röntgen-Systeme zu schaffen.

Die Aufgabe wird durch die unabhängigen Patentansprüche gelöst.

Ausführungsbeispiele der vorliegenden Erfindung schaffen ein Verfahren zur Bedienung eines Röntgen-Systems, wobei von einem Röntgen-System ausgegangen wird, das zumindest einen Manipulator, wie z.B. einem Roboter oder Linearantrieb, eine Röntgenquelle und einen Röntgendetektor umfasst. Bevorzugt ist entweder das zu untersuchende Objekt oder aber die Röntgenquelle bzw. der Röntgendetektor auf dem Manipulator angeordnet. Die auf dem Manipulator angeordnete Einheit legt durch die unterschiedlichen einzunehmenden Positionen (je nach Manipulatorstellung) die Trajektorie fest. Zuerst wird manuell, d.h. durch den Benutzer eine erste Position auf die Trajektorie mittels virtuellen Eingabemitteln (Virtual-Reality-Eingabemittel oder Augmented Reality-Eingabemittel) erklärt, so dass diese Position entweder von dem Röntgen-System angefahren werden kann, um eine Aufnahme des Objekts aus der ersten Position durchzuführen, oder die Aufnahme simuliert werden kann. Dieser Schritt wird für eine zweite Position auf der Trajektorie wiederholt. Aus diesen zwei Positionen wird jeweils eine (Röntgen-)Aufnahme aufgenommen oder simuliert, um zwei Röntgenprojektion zu erhalten. In einem zum Aufnehmen/Simulieren parallelen Schritt wird die eine der bzw. beide Röntgenprojektionen (z.B. mittels eines Live-Bildes) oder eine die Röntgenprojektionen beschreibende Information ausgegeben, sodass der Benutzer ein Feedback erhält, ob weitere oder andere Röntgenprojektion notwendig sind.

Entsprechend bevorzugten Ausführungsbeispielen handelt es sich bei dem Röntgensystem um ein CT-System. Insofern umfasst das Verfahren den optionalen Schritt des Rekonstruierens eines CT-Datensatzes auf Basis der zumindest zwei Röntgenaufnahmen. Ausgehend von den zwei (ersten und zweiten) Röntgenprojektionen kann dann bereits mit der Rekonstruktion des CT-Datensatzes begonnen werden, wobei mit zwei Röntgenprojektionen meistens nur ein partieller CT-Datensatz erhalten werden kann. In diesem Fall wird dem Benutzer der partielle CT-Datensatz ausgegeben (bzw. eine Information über selbe), so dass er entscheiden kann welche weiteren Winkel im Raum noch angefahren werden sollen. Stand der Technik aus der Patentliteratur ist bekannt. Hierzu zählt das Dokument WO 2014/160766, das eine computergestützte Optimierung von Scantrajektorie lehrt sowie die WO 2015/197566 A1.

Ausführungsbeispiele der vorliegenden Erfindung basieren auf der Erkenntnis, dass ein Röntgen-System oder auch ein CT-System sehr einfach und intuitiv gesteuert werden kann, wenn (erstens) die einzelnen Positionen auf der Trajektorie direkt vom Benutzer eingestellt werden können und wenn (zweitens) der Benutzer ein direktes Feedback über die bisher gemessenen Daten, z. B. anhand ersten Durchstrahlungsaufnahme, einer unvollständigen Rekonstruktion im Falle des CT-Systems oder anhand von Daten ausgehend von den bisherigen Aufnahmen erhält. Somit kann auch von einer visuellen Steuerung gesprochen werden, auch wenn die Steuerung nicht über den klassischen parameterbasierten Ansatz, sondern über virtuelle Eingabemittel erfolgt. Mittels dieser Eingabemittel kann der Benutzer die Komponenten des Röntgen-/CT-Systems, wie z. B. die Röntgenröhre oder einen Röntgendetektor virtuell bewegen, so dass diese Bewegung anschließend durch das reale Röntgen-/CT-System, z. B. durch Bewegen der Roboter bei einem robotergestützten System, umgesetzt werden kann. Ein derartiger Ansatz ermöglicht vorteilhafterweise, dass keine aufwändige Planung von Trajektorien mehr notwendig ist. So kann das Planen und Installieren von komplexen Objekthalterungen praktisch entfallen. Es wird weiterhin auch die Situation von sogenannten "trial- and error"-Messungen vermieden, bei welchen die Parameter bei der Trajektorienplanung immer wieder variieren werden, bis das Konstruktionsergebniss den Erwartungen entspricht. Anders ausgedrückt heißt es, dass mit einem derartigen Röntgensystem das Prinzip nach "what you see is what you get" verwirklicht werden kann.

Entsprechend Ausführungsbeispielen sind die virtuellen Eingabemittel beispielsweise durch einen Sensorhandschuh oder durch die Nutzung der Röntgen-System-Aktorik als Eingabemittel realisiert. Bei dem Sensorhandschuh werden die beweglichen Komponenten des Röntgen-Systems virtuell im Raum positioniert (Stichwort Virtual Reality, aber auch Augmented Reality). Bei dem Konzept mit der Nutzung der Aktorik als Sensorik können die beweglichen Komponenten des Röntgen-Systems entsprechend verschoben werden, was bei den meisten Manipulatoren/Robotern durch den sogenannten "Kraftfreimodus" realisierbar ist, so dass die unterschiedlichen Positionen auf die Trajektorie direkt eingestellt werden können. Hierbei wird von "handgeführter taktiler Bewegung" gesprochen. Diese Positionen werden entsprechend Ausführungsbeispielen sowohl bei der virtuellen als auch bei der reellen Positionierung entsprechend gespeichert, so dass zu einem späteren Zeitpunkt bzw. bei der durchzuführenden Messung die Positionen wieder angefahren werden können. Ausgehend von derartigen virtuellen Eingabemitteln wird klar, dass diese es auch ermöglichen, komplexe Trajektorien, welche analytisch beschreibbaren Standardgeometrien, wie Kreis und Helix, nicht entsprechen, auf einfache Art und Weise bestimmt und anzufahren. Hierbei muss der Bediener auch nicht über entsprechendes Fachwissen zur Bedienung der Anlage, wie z. B. in Bezug auf die einzelnen Parameter der Trajektorie, verfügen. Ein derartiges robotergestütztes Röntgen-/CT-System kann so einfach bedient werden, wie eine Laboranlage für Kreis-CT-Anwendungen.

Entsprechend Ausführungsbeispielen kann als Feedback erste Durchstrahlungsaufnahmen, der partielle CT-Datensatz, d. h. also das rekonstruierte Voxel-Modell (allgemein: die CT-Rekonstruktion), dem Benutzer beispielsweise über einen Bildschirm oder auch über Mittel der Virtual-Reality, wie z. B. einer 3D-Brille, ausgegeben werden. Entsprechen weiteren Ausführungsbeispielen wäre es auch denkbar, dass statt der Röntgen-Aufnahme der Benutzer nur eine Information über selbige, wie z. B. eine Aussage über die mit den bisher erzielten Aufnahmen erreichte Qualität bzw. Güte oder Auflösung zurückgegeben wird. Eine klassische Aufgabe von Röntgen-Systemen in der Werkstattprüfung ist es, Fehlstellen, wie z. B. Lunker im Material aufzuspüren. Deshalb kann entsprechend weiteren Ausführungsbeispielen statt der Röntgen-Aufnahme auch eben das Auswertungsergebnis dem Benutzer als Feedback gegeben werden.

Der Benutzer kann dann ausgehend hiervon bestimmen, ob weitere Positionen möglich sind. Entsprechend einem weiteren Ausführungsbeispiel umfasst das Verfahren also den Schritt des manuellen Festlegens einer weiteren Position und das Aufnehmen oder Simulieren der Aufnahme aus der weiteren Position. Durch das iterative Ergänzen des Datensatzes für die CT-/Röntgen-Aufnahme wird eine große Zeitersparnis bei der manuellen Eskalationsprüfung erreicht, da so vermieden werden kann, dass unnötig viele Röntgen-Aufnahmen bzw. Röntgen-Aufnahmen aus Positionen ohne zusätzlichen Informationsgehalt genommen werden.

An dieser Stelle sei angemerkt, dass die erste und/oder zweite Position der Trajektorie durch die Position von Röntgenquelle und von Röntgendetektor relativ zu dem Objekt bzw. relativ zueinander definiert sind. Weitere Ausführungsbeispiele beziehen sich auf ein Verfahren für ein Röntgen-System, was beispielsweise zwei (z. B. mehrgliedrige) Roboter umfasst, wobei der eine Roboter eben die Röntgenquelle und der andere Roboter den Röntgendetektor trägt, so dass diese relativ zueinander und insbesondere um das Objekt herum bewegbar sind.

Weitere Ausführungsbeispiele beziehen sich auf ein Computerprogramm zur Durchführung des obigen Verfahrens. Entsprechend weiteren Ausführungsbeispielen kann das Verfahren auch durch eine Vorrichtung zur Bedienung eines Röntgen-Systems durchgeführt werden. Diese Vorrichtung umfasst dann die virtuellen Eingabemittel zum Festlegen der ersten und/oder zweiten Position für das Röntgen-System auf der Trajektorie, Mittel zur Aufnahme und/oder zur Simulation der Aufnahme aus der ersten und/oder zweiten Position. Des Weiteren umfasst die Vorrichtung auch Ausgabemittel, wie z. B. eine 3D-Brille oder einen einfachen Monitor zur Darstellung der Röntgen-Aufnahme (z.B. im Livemodus), des partiellen CT-Datensatzes bzw. eine die partielle Röntgen-Aufnahme beschreibende Information. Ein weiteres Ausführungsbeispiel bezieht sich auf ein Röntgen-System sowie auf ein CT-System mit eben dieser Vorrichtung.

Weiterbildungen sind in den Unteransprüchen definiert. Ausführungsbeispiele der vorliegenden Erfindung werden nachfolgend anhand der beiliegenden Zeichnungen erläutert. Es zeigen:
- Fig. 1a: ein schematisches Flussdiagramm eines Verfahrens zur Bedienung eines Röntgen-Systems gemäß einem Basisausführungsbeispiel;
- Fig. 1b: ein Blockdiagramm eines Röntgen-Systems, welches mittels des Verfahrens aus Fig. 1a bedienbar ist, gemäß einem Ausführungsbeispiel; und
- Fig. 2a,b: ein Blockdiagramm eines erweiterten Röntgen-Systems, welches ebenfalls mit dem Verfahren aus Fig. 1a bedienbar ist, gemäß einem Ausführungsbeispiel in zwei verschieden Stellungen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

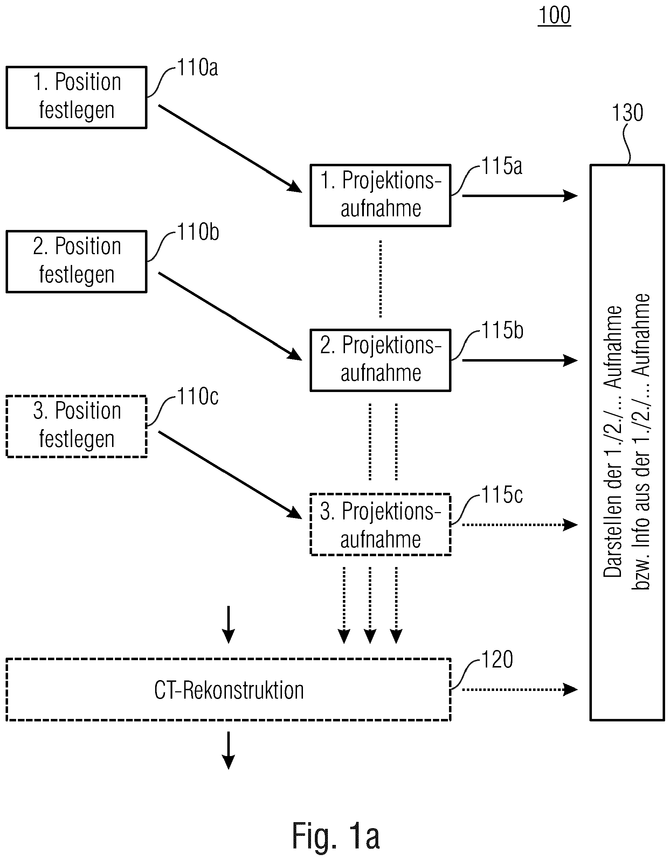

Fig. 1a zeigt ein Verfahren 100 zur Bedienung eines Röntgen-Systems, hier beispielsweise eines CT-Systems, das insgesamt sechs Basisschritte 110a, 115a, 110b, 115b, 120 umfasst. Diese Schritte lassen sich in rein manuellen, d.h. vom Benutzer durchgeführte und zumindest bevorzugt automatisch ausgeführte Schritte untergliedern.

Die Schritte 110a und 115a sind aneinander gekoppelt. Hierbei stellt der Schritt 110a einen manuellen Schritt, nämlich das Festlegen einer ersten Position für den Manipulator auf der Trajektorie dar. Dieser erste Schritt wird mit virtuellen Eingabemitteln (Virtual-Reality-Eingabemitteln), wie z. B. einem Sensorhandschuh, einem von einer Kamera überwachten Handschuh bzw. ein von einer Kamera überwachten Zeigeelement durchgeführt. Im Allgemeinen ist ein derartiges virtuelles Eingabemittel ein Mittel zum Markieren einer Position im Raum.

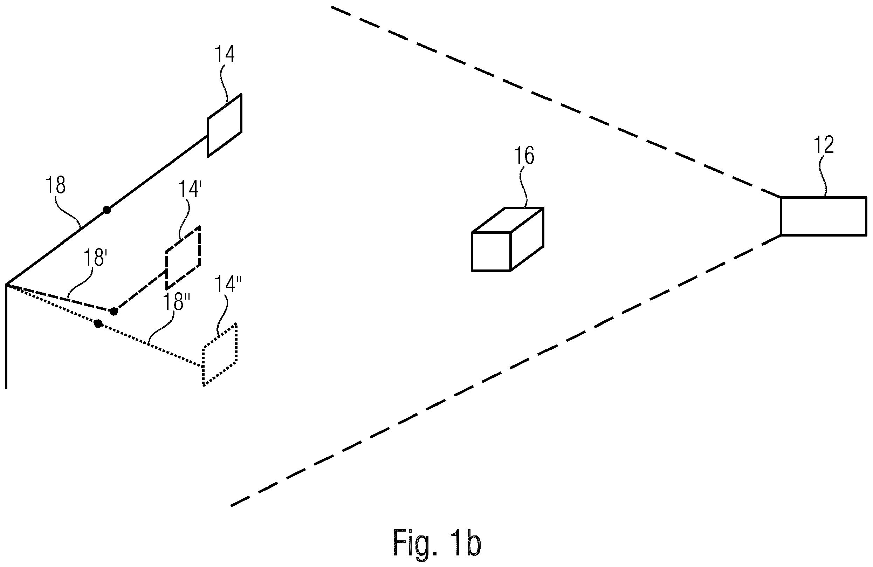

Ausgehend von der in dem Schritt 110a bestimmten, ersten Position wird dann entweder eine erste Aufnahme genommen oder diese zumindest simuliert. Dies erfolgt in einem Schritt 115a. Bei der Aufnahme bzw. Simulation der Aufnahme wird eben von der ersten Position ausgegangen und eine erste Röntgenprojektion als Ergebnis erhalten. Diese erste Position ist beispielsweise in Fig. 1b dargestellt.

Fig. 1b zeigt ein Röntgen-System 10 mit einer feststehenden Röntgenquelle 12 sowie einem beweglichen Detektor 14, wobei zwischen dem beweglichen Detektor 14 und der Röntgenquelle 12 ein zu untersuchendes Objekt 16 angeordnet ist. Der bewegliche Detektor 14 ist unter Zuhilfenahme eines Manipulators, hier eines einfachen Eingelenk-Manipulators 18 mit einen Schwenkarm um das Objekt 16 bzw. um die Röntgenquelle 12 bewegbar. Die erste Position des Manipulators 18 und damit auch die erste Position des Detektors 14 bzw. allgemein die erste Position der Elemente 12, 14 und 16 relativ zueinander ist in Fig. 1b mit durchgezogenen Linien dargestellt. Ausgehend von dieser relativen Stellung der Elemente 12, 14, 16 zueinander wird die erste Projektionsaufnahme genommen.

Da mit einer einzelnen Projektionsaufnahme noch keine Röntgen-Rekonstruktion möglich ist, wird in einem nächsten Schritt 11 0b, der vergleichbar zum Schritt 110a ist, die zweite Position festgelegt, so dass dann in einem Schritt 115b (vergleichbar mit Schritt 115a) die zweite Aufnahme genommen bzw. simuliert werden kann, um die zweite Röntgenprojektion zu erhalten.

Diese zweite Position des Manipulators ist in der Fig. 1b mittels gestrichelten Linien und dem Bezugszeichen 18' versehen. Hieraus ergibt sich auch die zweite Position des Röntgendetektors 14`. Im Ergebnis stellt dann die zweite Röntgenprojektion das Objekt 16 aus einer anderen Position, wie z.B. aus einem anderen Winkel dar.

Sowohl während bzw. unmittelbar nach der ersten Röntgenaufnahme 115a, als auch während bzw. unmittelbar nach der zweiten Röntgenaufnahme 115b erfolgt in dem Schritt 130 eine Darstellung derselben für den Benutzer, so dass dieser ein direktes Feedback erhält und ausgehend hiervon er entscheiden kann, ob weitere Aufnahmen notwendig sind, z.B. weil die gesuchte Fehlstelle im Objekt 16 nicht in dem Ausschnitt enthalten ist, der mit der Aufnahme in dem Schritt 115a genommen wurde, oder ausgehend hiervon er die nächsten Positionen (vgl. Schritt 110b) planen kann. Alternativ zu dem Schritt 130 wäre es auch denkbar, dass der Benutzer gar nicht die grafische Darstellung der Aufnahme, sondern nur eine Information, die Auskunft über die Aufnahme gibt, erhält.

Im hier vorliegenden Fall eines CT-Systems werden die zwei Durchstrahlungsaufnahmen kombiniert, sodass eine CT-Rekonstruktion erfolgen kann. Diese CT-Rekonstruktion wird dann in dem nachgelagerten Schritt 120 durchgeführt, in dem die zumindest zwei Röntgenprojektionen miteinander kombiniert werden. Ausgehend von einer derartigen Rekonstruktion kann z.B. ein Voxel-Modell zur Darstellung des 3D-Volumens des Objekts 16 inklusive der Abschwächungskoeffizienten je Volumenanteil oder ein Modell zur Identifikation von 2D-Flächen des Objekts 16 erhalten werden. Alternativ kann der CT-Datensatz auch gleich ausgewertet werden, z. B. dahin gehend, dass eine direkte Identifikation von Lunkern im Volumen des Objekts 16 möglich ist.

Im Regelfall bedarf eine derartige Rekonstruktion eine Vielzahl von einzelnen Projektionen, um die Rekonstruktion mit einer ausreichenden Auflösung oder allgemein mit ausreichender Güte bereitzustellen. Damit nicht, wie im Stand der Technik üblich, einfach eine Vielzahl von Projektionsaufnahmen aus allen möglichen Winkeln genommen wird, wird in dem parallelen Schritt 130 der partielle CT-Datensatz, d. h. also das unvollständig rekonstruierte Modell, dargestellt, so dass der Benutzer hier ein direktes visuelles Feedback dahin gehend erhält, ob die bisher genommenen oder geplanten Positionen auf der Trajektorie ausreichend sind oder nicht. Ausgehend von diesem Feedback kann der Benutzer dann entscheiden, ob er weitere Rekonstruktionsaufnahmen nimmt (vgl. optionale Schritte 110c und 115c).

Entsprechend weiteren Ausführungsbeispielen führt der Benutzer also den Schritt 110c (optionaler Schritt) durch, um eine dritte Position auf der Trajektorie festzulegen. Ausgehend von dieser dritten Position wird dann im Schritt 115c eine dritte Projektionsaufnahme genommen, die dann entweder im kontinuierlichen Schritt 130 direkt dargestellt (Fall 2D-Röntgen) oder im Fall CT bei der Wiederholung des Schrittes 120 zur Rekonstruktion hinzugefügt und im Schritt 130 wiederum an den Benutzer ausgegeben wird.

So können Bauteile mit komplexer Geometrie ohne aufwändige Parametrisierung oder Berechnung geprüft werden. Der Bediener kann auf einfache Weise die korrekte Funktionsweise der Anlage verifizieren, d. h. beispielsweise ob das Rekonstruktionsergebnis den Spezifikationen weiterhin entspricht. An dieser Stelle sei angemerkt, dass die Schritte 115a, 115b, 120 und 130 entsprechend Ausführungsbeispielen automatisiert durchgeführt werden.

Das vorgestellte Verfahren beschreibt ein interaktives Bedienkonzept von Röntgen-Anlagen. Dabei handelt es sich um eine intuitive und auf Feedback basierende Variante, Röntgen-Systeme mit Hilfe von externen Steuerungsgeräten wie Handschuhen, virtuelle /VR-Brillen, Joysticks etc. zu bedienen. Vorteilhaft bei diesem Verfahren ist, dass der Anwender dabei ein direktes Feedback über das aktuelle Ergebnis aus den bisherigen gemessenen Daten erhält, z.B. durch ein Art Live-Bild, durch eine Visualisierung des rekonstruierten Datensatzes oder auch Angabe von Bewertungsgrößen, z.B. Maße bezüglich Bildqualität. Das Verfahren ist somit eine Kombination aus Bedienung einer Anlage und direkter Rückkopplung der gemessenen Daten, d.h. der Benutzer kann dadurch direkt entscheiden, ob und wann die vorliegenden Messdaten hinreichend sind, um eine vorliegenden Aufgabenstellung lösen zu können. An dieser Stelle sei darauf hingewiesen, dass bei den hier im Fokus liegenden Anwendungen der industriellen Röntgenprüfung, z.B. Materialprüfung, auch eine Dauerbelichtung zum Einsatzkommen kann, um ein Live-Bild im Schritt 130 zu ermöglichen, da in Abgrenzung zu medizinischen Anwendungen die Strahlenbelastung keinen negativen Einfluss auf das Untersuchungsobjekt hat.

Entsprechend weiteren Ausführungsbeispielen können je nachdem wie gut die bisherige Datengüte ist weiter Positionen angefahren (vgl. Schritt 110c) und von dies Röntgenprojektionen genommen werden (vgl. Schritt 115c). IN Fig. 1b ist eine derartige weitere Position mittels gepunkteten Linien illustrier (vgl. Manipulator 18" und Detektor 14").

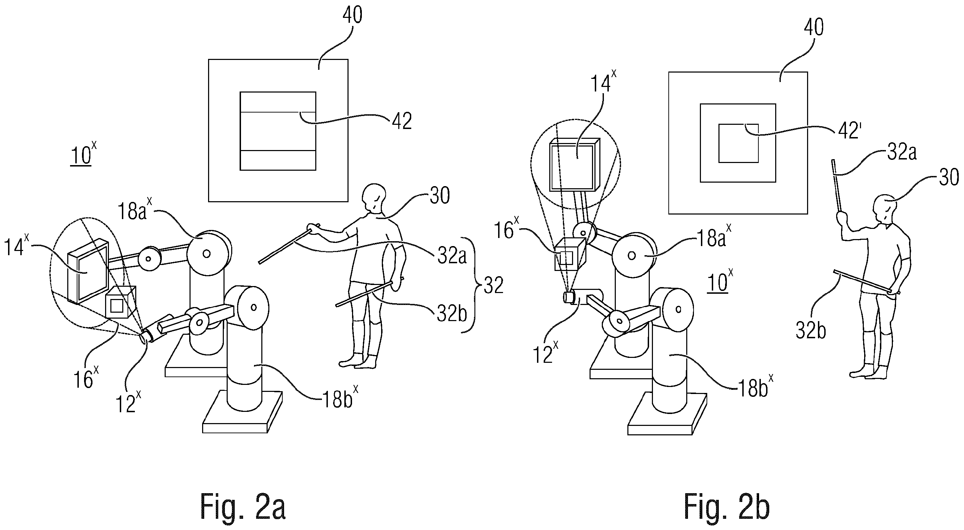

Bezug nehmend auf Fig. 2a und 2b wird ein erweitertes Ausführungsbeispiel erläutert. Hierbei zeigt Fig. 2a eine erste Konfiguration des CT-Systems, d. h. eine erste Position, während Fig. 2b eine zweite Konfiguration (zweite Position) darstellt.

Fig. 2a zeigt ein CT-Systemen 10* mit einem ersten Roboter 18a* und einem zweiten Roboter 18b*. An dem ersten Roboter 18a* ist der Röntgendetektor 14* angeordnet, während an dem zweiten Roboter 18b* die Strahlenquelle 12* angeordnet ist. Beide Roboter 18a* und 18b* sind mehrgliedrige Roboter, so dass also Röntgendetektor 14* und Strahlenquelle 12* unabhängig voneinander bewegbar sind. Zwischen den zwei Elementen 12* und 14* ist das zu untersuchende Objekt 14* angeordnet.

Wie zu erkennen ist, ermöglichen die Freiheitsgrade der Roboter 18a* und 18b*, dass das Objekt 16* im Wesentlichen von allen möglichen Perspektiven um dasselbe sowie in unterschiedlichen Abständen zu selbigem abgebildet werden kann.

Hier in Fig. 2a ist eben eine erste Position bzw. Stellung der zwei Roboter 18a* und 18b* dargestellt, was der ersten Position auf der Trajektorie des CT-Systems 10* entspricht. Diese erste Position ist durch den nebenstehenden Benutzer 30 festgelegt, indem dieser mittels VR-Eingabemitteln 32 sowohl den Roboter 18a* als auch den Roboter 18b* in seiner Pose festlegt.

In diesem Ausführungsbeispiel sind die VR-Eingabemittel 32 durch zwei Zeigemittel, hier Zeigestäben 32a und32b realisiert, die der Benutzer 30 frei im Raum führen kann. Diese Position der Zeigestellung 32a und 32b und/oder die Orientierung der Zeigestelle 32a und 32b im Raum wird mittels einer Steuerung (nicht dargestellt) direkt auf das CT-System 10* übertragen und ausgehend davon die Roboter 18a* und 18b* ausgerichtet. Bei der Gegenüberstellung der Pose des Benutzers 30 und der Konfiguration des Röntgensystems 10* wird eben deutlich, dass die Roboter 18a* und 18b* eben der Halterung des Benutzers 30 folgen.

Im Detail heißt das, dass der Stab 32a waagrecht vom Benutzer 30 bzw. um genau zu sein von der rechten Hand des Benutzers 30 ausgerichtet ist, so dass auch der Roboter 18a*, der dem Stab 32a folgt, eben waagrecht orientiert ist. Analog hierzu ist der Stab 32b und folglich auch der Roboterarm des Roboters 18b* waagrecht ausgerichtet.

In dieser ersten Position wird nun eine erste Projektion genommen, welche mittels den Darstellungsmitteln 40, hier einem Display, dem Benutzer 30 dargestellt wird. Ausgehend von der ersten Projektion sind nur zweidimensionale Schatten, hier 42, erkennbar, so dass dem Benutzer 30 klar wird, dass er zumindest mit einem zweiten Winkel das Objekt 16* ablichten muss. Diese zweite Position auf der Trajektorie des Röntgensystems 10* ist in Fig. 2b dargestellt.

Fig. 2b stellt wiederum das Röntgensystem 10* dar. Die Ausrichtung der Roboter 18a* und 18b* ist weiterhin in Abhängigkeit von der Haltung des Benutzers 30. Der Benutzer 30 hält das Zeigeelement 32a (rechter Hand) senkrecht nach oben, so dass infolgedessen auch der Roboterarm des Roboters 18a* eben senkrecht nach oben ausgerichtet ist, was die Konsequenz hat, dass der Detektor 14* eben im Vergleich zu der Konfiguration aus Fig. 2a weiter oben im Raum positioniert ist.

Der Benutzer 30 hält in der Darstellung von Fig. 2b den zweiten Zeigestab 32b etwas angewinkelt, was die Konsequenz hat, dass der Roboterarm des Roboters 18b*, zumindest im Vergleich zu der Konfiguration aus Fig. 2a, angewinkelt ist und folglich auch die Röntgenquelle 12* näher am Objekt 16* ist.

In dieser zweiten Position wird dann eine zweite Röntgenposition genommen und das Rekonstruktionsergebnis über die Anzeigemittel 40 wiederum dargestellt. Nun ist nicht nur der Schatten 42, sondern auch schon eine Kontur 42` darstellbar, so dass der Benutzer ein direktes Feedback über die vorgenommene Manipulation erhält.

Die Funktionalität dieses Ausführungsbeispiels aus Fig. 2a und 2b kann wie folgt beschrieben werden: Der Benutzer ist somit in der Lage, das System solange "per Hand" zu bewegen, bis die ihm zur Verfügung stehenden 3D-Daten ausreichend für eine Beurteilung sind. Herbei kann der Benutzer 30 entsprechend Ausführungsbeispielen die Position z.B. mittels eines Tasters als Aufnahmeposition markieren, sodass entweder eine Aufnahme mittels des CT-Systems ausgelöst wird oder die Position zumindest gespeichert wird. Das Konzept erlaubt es, mit geringem Aufwand, wie z.B. Umbauten an der Anlage oder aufwändiger Bahnplanung, auf unterschiedlichste Bauteil-Geometrien zu reagieren. Manuell erzeugte Trajektorien können gespeichert und bei Bedarf erneut gefahren werden.

Bei Ausführungsbeispielen aus Fig. 2a und 2b wurde davon ausgegangen, dass die VR-Eingabemittel 30 beispielsweise Zeigestäbe sind. An dieser Stelle sei darauf hingewiesen, dass entsprechend weiteren Ausführungsbeispielen auch andere Eingabemittel, wie z. B. Handschuhe, die über eine Kamera getrackt werden oder allgemein ein reines Kameratracking oder Sensorhandschuhe zum Einsatz kommen können. Derartige Handschuhe in Kombination mit einer 3D-Dartstellung, z.B. über eine 3D-Brille macht insbesondere dann Sinn, wenn nicht nur die reine Position und Orientierung des Roboters bzw. der befestigten Röntgenquelle /-Sensor, sondern auch eine Winkelstellung der Roboter gesteuert werden soll. Alternativ wären als VR-Eingabemittel auch Joystick oder allgemein Sticks, wie sie beispielsweise von Spielkonsolen bekannt sind, einsetzbar. Alle derartigen VR-Eingabemittel haben gemein, dass eine Bewegung des Benutzers unter Zuhilfenahme einer Berechnungseinheit in eine Bewegung zumindest eines der Roboter 18a* oder 18b* bzw. allgemein des CT-Systems überführbar sind.

Entsprechend weiteren Ausführungsbeispielen wäre es auch denkbar, dass statt dem Display 40 virtuelle Mittel, wie z. B. eine 3D-Brille (Stichwort "augmented reality") zum Einsatz kommen, ausgehend von welchen der Benutzer wesentlich einfacher den Roboter im Raum positionieren kann, z.B. ohne Roboter, Strahlenquelle, Strahlendetektor oder Objekt taktil zu berühren.

Entsprechend weiteren Ausführungsbeispielen wäre es auch denkbar, dass die VR-Eingabemittel auch durch die Roboter selbst realisiert sind, indem diese beispielsweise in den sogenannten "Freibewegungsmodus" geschaltet werden und vom Benutzer einfach per Hand verschoben werden können.

Bei allen obigen Ausführungsbeispielen wurde davon ausgegangen, dass direkt während des Verfahrens eine Röntgenprojektion durchgeführt wird. Dies ist jedoch gar nicht notwendig, es reicht nämlich entsprechend weiteren Ausführungsbeispielen aus, die einzelnen Aufnahmen nur zu simulieren, um so die Trajektorienplanung durchzuführen. Deshalb wird entsprechend Ausführungsbeispielen nicht der tatsächlich rekonstruierte, partielle CT-Datensatz dargestellt, sondern eine Simulation desselben. Dies ist insbesondere hinsichtlich der Messplanung sinnvoll. Alternativ zu den visuellen Anzeigen des Rekonstruktionsergebnisses aus den bisher aufgenommenen Durchstrahlungsbildern (z. B. über ein iteratives Rekonstruktionsverfahren) wäre auch ein Ergebnis einer Auswertung, z. B. Anzahl der aktuell detektierbaren Fehlstellungen im Objekt oder eine Angabe von Bewertungsgrößen, wie Bildqualität oder Auflösung denkbar. Ebenso wäre eine Kombination dieser einzelnen Merkmale sinnvoll.

Das Verfahren kann insbesondere für robotergestützte Computertomographiesysteme effektiv eingesetzt werden, da hier in der Regel zwei oder mehr Industrieroboter frei im Raum positioniert und die Röntgenkomponenten manuell an diesen befestigt werden. Solche Anlagen sind meistens für die Röntgenuntersuchung von sehr großen Objekten wie Flugzugbauteilen (Flügel) oder PKW-Karosserien konzipiert, die aufgrund ihrer Form keine Trajektorien mit geradlinigen (kreisförmigen Bewegungen) zulassen. Die Bedienung und Bahnplanung (umfassend beliebige Punkte im Raum um das Objekt) für solche Systeme ist in der Regel hochkomplex und für sich ständig ändernde Anforderungen nicht kosteneffizient lösbar. Diese Problematik kann mit Hilfe eines interaktiven Bedienkonzepts effizient gelöst werden. Selbst komplexe Bahnen können gezielt erstellt und auf ihre Qualität hin überprüft werden. Qualität bedeutet dabei, dass die erzeugten Daten die der Anwendung entsprechenden gewünschten Ergebnisse liefern.

In der Eskalationsprüfung werden Bauteile oft auf Basis von vermuteten Defekten manuell untersucht. Diese manuelle Prüfung unterliegt häufig Einschränkungen, wie der Geometrie des Bauteils und den damit möglichen Trajektorien. Das Bedienkonzept erlaubt es, verdächtige Fehlstellen gezielt zu untersuchen ohne dass aufwändige Berechnungen durchgeführt werden müssen. Das Bedienkonzept erleichtert die Planung und Realisierung moderner Anlagenkonzepte, bei denen eine oder mehrere Komponenten sowie das Objekt durch komplexe Manipulationssysteme bewegt werden. Die Bahnbeschreibung und Planung für solche Anlagen ist bisher nicht oder nur unzureichend gelöst.

Auch wenn bei obigen Ausführungsbeispielen immer davon ausgegangen wurde, dass Röntgenquelle und/oder Röntgendetektor mit dem Manipulator bzw. Roboter gekoppelt sind und durch selben um das Objekt bzw. relativ zu dem Objekt bewegt werden, sei darauf hingewiesen, dass entsprechend Ausführungsbeispielen auch das Objekt selbst mittels eines Manipulators, wie z.B. eines Roboters oder Linearantriebs, (relativ zu der beispielsweise feststehenden Röntgenquelle und/oder dem beispielsweise feststehenden Röntgendetektor) bewegt werden kann, um so die einzelnen Position auf der Trajektorie anzufahren. Auch können gemäß weiteren Ausführungsbeispielen alle drei Elemente (Objekt, Röntgenquelle und Röntgendetektor) bewegt werden, um eine Relativbewegung zwischen denselben zu bewirken.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zur Bedienung eines Röntgen-Systems (10, 10*), welches zumindest einen Manipulator (18, 18a*, 18b*), eine Röntgenquelle (12, 12*) und einen Röntgendetektor (14, 14*) umfasst, wobei der Manipulator (18, 18a*, 18b*) die Röntgenquelle, (12, 12*), den Röntgendetektor (14, 14*) oder ein Objekt (16) bewegen kann, mit folgenden Schritten:
manuelles Festlegen (110a) einer ersten Position für den Manipulator (18, 18a*, 18b*) auf einer Trajektorie mittels virtuellen Eingabemitteln (30);
Aufnehmen (115a) der Aufnahme des Objekts (16) mittels des Röntgen-Systems (10, 10*) aus der ersten Position, um eine erste Röntgenprojektion zu erhalten;
Darstellen (130) der ersten Röntgenprojektion oder einer aus der ersten Röntgenprojektion abgeleiteten Information;
manuelles Festlegen (110b) einer zweiten Position auf der Trajektorie mittels der virtuellen Eingabemittel (30) ausgehend von der Darstellung der ersten Röntgenprojektion oder einer aus der ersten Röntgenprojektion abgeleiteten Information;
Aufnehmen (115b) der Aufnahme des Objekts (16) mittels des Röntgen-Systems (10, 10*) aus der zweiten Position, um eine zweite Röntgenprojektion zu erhalten; und
Darstellen (130) der zweiten Röntgenprojektion oder einer aus der zweiten Röntgenprojektion abgeleiteten Information;
Speichern der ersten Position und der zweiten Position, wobei die erste Position und die zweite Position für den Manipulator (18, 18a*, 18b) die Trajektorie festlegen;
wobei die virtuellen Eingabemittel (30) Augmented-Reality-Eingabemittel, mindestens einen Sensorhandschuh und/oder mindestens ein Zeigeelement zum Markieren einer Position im 3D-Raum umfassen.

2. Verfahren (100) gemäß Anspruch 1, wobei das Röntgen-System (10, 10*) ein CT-System ist, und das Verfahren den Schritt des Beginnes (120) der Rekonstruktion des CT-Datensatzes auf Basis der ersten und zweiten Röntgenprojektion aufweist, um einen partiellen CT-Datensatz zu erhalten; und wobei bei dem Schritt Darstellen (130) der ersten und der zweiten Röntgenprojektion oder der aus der ersten und zweiten Röntgenprojektion abgeleiteten Information das Darstellen des partiellen CT-Datensatzes oder einer den partiellen CT-Datensatz beschreibende Information umfasst; oder
wobei das Röntgen-System (10, 10*) ein CT-System ist, und das Verfahren den Schritt des Beginnes (120) der Rekonstruktion des CT-Datensatzes auf Basis der ersten und zweiten Röntgenprojektion aufweist, um einen partiellen CT-Datensatz zu erhalten; und wobei bei dem Schritt Darstellen (130) der ersten und der zweiten Röntgenprojektion oder der aus der ersten und zweiten Röntgenprojektion abgeleiteten Information das Darstellen des partiellen CT-Datensatzes oder einer den partiellen CT-Datensatz beschreibende Information umfasst, und wobei der partielle CT-Datensatz eine unvollständige Rekonstruktion oder eine Auswertung der unvollständigen Rekonstruktion hinsichtlich einer Untersuchungsaufgabe ist.

3. Verfahren (100) gemäß einem der vorhergehenden Ansprüche, wobei die aus der ersten und zweiten Röntgenprojektion abgeleiteten Information oder die den partiellen CT-Datensatz beschreibende Information eine Information bezüglich der Auflösung der Röntgen-Aufnahme oder des CT-Datensatzes oder eine Information bezüglich der Güte der Röntgen-Aufnahme oder des CT-Datensatzes ist.

4. Verfahren (100) gemäß einem der vorhergehenden Ansprüche, wobei das Verfahren (100) die weiteren Schritte des manuellen Festlegens einer weiteren Position für das Röntgen-System (10, 10*) mittels den virtuellen Eingabemitteln (30) sowie des Aufnehmens der Aufnahme des Objekts (16) mittels des Röntgen-Systems (10, 10*) aus der weiteren Position umfasst, um eine weitere Projektion zu erhalten; oder
wobei das Verfahren (100) die weiteren Schritte des manuellen Festlegens einer weiteren Position für das Röntgen-System (10, 10*) mittels den virtuellen Eingabemitteln (30) sowie des Aufnehmens der Aufnahme des Objekts (16) mittels des Röntgen-Systems (10, 10*) aus der weiteren Position umfasst, um eine weitere Projektion zu erhalten; und wobei die Schritte wiederholt werden, bis die Röntgen-Aufnahme oder der partielle CT-Datensatz einer vorgegebenen Güte und/oder Auflösung entspricht.

5. Verfahren (100) gemäß einem der vorhergehenden Ansprüche, wobei das Verfahren (100) den Schritt des Anfahrens der ersten Position vor dem Aufnehmen (115a) der Aufnahme aus der ersten Position umfasst, und wobei das Verfahren (100) den Schritt des Anfahrens der zweiten Position vor dem Aufnehmen (115b) der Aufnahme aus der zweiten Position umfasst.

6. Verfahren (100) gemäß einem der vorhergehenden Ansprüche, wobei der Manipulator (18, 18*a, 18b*) einen Roboter oder mehrgliedrigen Roboter umfasst; und/oder
wobei die erste und/oder zweite Position durch die Stellung des Roboters oder durch die Stellungen der mehreren Glieder des mehrgliedrigen Roboters definiert sind; und/oder
wobei das Röntgen-System (10, 10*) zwei Manipulatoren (18, 18*a, 18b*) umfasst, wobei der erste der zwei Manipulatoren (18, 18a*, 18b*) die Röntgenquelle (12, 12*) und der zweite der zwei Manipulatoren (18, 18a*, 18b*) den Röntgendetektor (14, 14*) trägt, wobei die zwei Manipulator (18, 18*a, 18b*) unabhängig voneinander bewegbar sind, und wobei die erste Position (18) und/oder die zweite Position (18') auf der Trajektorie eine Kombination der Positionen der zwei Manipulatoren (18, 18*a, 18b*) darstellt; und/oder wobei der Manipulator (18, 18*a, 18b*) ausgebildet ist, um das Objekt (16) zu bewegen und/oder um das Objekt (16) relativ zu der Röntgenquelle (12, 12*) und/oder zu dem Röntgendetektor (14, 14*) zu bewegen, um die erste Position (18) und/oder die zweite Position (18') auf der Trajektorie anzufahren.

7. Verfahren (100) gemäß einem der vorhergehenden Ansprüche, wobei die erste und/oder zweite Position (18') der Trajektorie durch die Position von Röntgenquelle (12, 12*) und von Röntgendetektor (14, 14*) relativ zu dem Objekt (16) und/oder relativ zueinander definiert sind.

8. Verfahren (100) gemäß einem der vorhergehenden Ansprüche, wobei die virtuelten Eingabemittel (30) Virtual-Reality-Eingabemittel, Augmented-Reality-Eingabemittel, mindestens einen Sensorhandschuh und/oder mindestens ein Zeigeelement zum Markieren einer Position im 3D-Raum umfassen.

9. Verfahren (100) gemäß einem der vorhergehenden Ansprüche, wobei die virtuelle Eingabemittel (30) durch den Manipulator (18, 18*a, 18b*) selbst gebildet sind, so dass eine manuelle Bewegung des Manipulators (18, 18*a, 18b*) als Eingabe verstanden wird.

10. Verfahren (100) gemäß einem der vorhergehenden Ansprüche, wobei je Manipulator ein virtuelles Eingabemittel vorgesehen ist.

11. Verfahren (100) gemäß einem der vorhergehenden Ansprüche, wobei die Röntgenquelle (12, 12*) und der Röntgendetektor (14, 14*) für eine Dauerbelichtung ausgelegt sind.

12. Verfahren (100) gemäß einem der vorhergehenden Ansprüche, wobei das Aufnehmen des Objekts (16) mittels des Röntgen-Systems (10, 10*) aus der ersten und zweiten Position kontinuierlich erfolgt; und das Darstellen (130) der ersten und zweiten Röntgenprojektion als Live-Aufnahme erfolgt.

13. Verfahren (100) gemäß einem der vorherigen Ansprüche,
wobei das Röntgen-System (10, 10*) ein CT-System ist, und das Verfahren den Schritt des Beginnes (120) der Rekonstruktion des CT-Datensatzes auf Basis der ersten und zweiten Röntgenprojektion aufweist, um einen partiellen CT-Datensatz zu erhalten; und
wobei bei dem Schritt Darstellen (130) der ersten und der zweiten Röntgenprojektion oder der aus der ersten und zweiten Röntgenprojektion abgeleiteten Information das Darstellen des partiellen CT-Datensatzes oder einer den partiellen CT-Datensatz beschreibende Information umfasst;
wobei das Verfahren (100) die weiteren Schritte des manuellen Festlegens einer weiteren Position für das Röntgen-System (10, 10*) mittels den virtuellen Eingabemitteln (30) sowie des Aufnehmens der Aufnahme des Objekts (16) mittels des Röntgen-Systems (10, 10*) aus der weiteren Position umfasst, um eine weitere Projektion zu erhalten;
wobei die Schritte wiederholt werden, bis die Röntgen-Aufnahme oder der partielle CT-Datensatz einer vorgegebenen Güte und/oder Auflösung entspricht.

14. Computerprogramm mit einem Programmcode zur Durchführung von den Verfahrensschritten des Verfahrens (100) nach einem der vorhergehenden Ansprüche, wenn das Computerprogramm (100) auf einem Röntgen-Systems (10, 10*) abläuft.

## Claims

1. A method (100) for operating an X-ray system (10, 10*) comprising at least a manipulator (18, 18a*, 18b*), an X-ray source (12, 12*) and an X-ray detector (14, 14*), the manipulator (18, 18a*, 18b*) being able to move the X-ray source (12, 12*), the X-ray detector (14, 14*) or an object (16), comprising the steps of:
manually setting (110a) a first position for the manipulator (18, 18a*, 18b*) on a trajectory by means of virtual input means (30);
recording (115a) the recording of the object (16) by means of the X-ray system (10, 10*) from the first position in order to obtain a first X-ray projection;
representing (130) the first X-ray projection or information derived from the first X-ray projection;
manually setting (110b) a second position on the trajectory by means of the virtual input means (30) based on the representation of the first X-ray projection or information derived from the first X-ray projection;
recording (115b) the recording of the object (16) by means of the X-ray system (10, 10*) from the second position in order to obtain a second X-ray projection; and
representing (130) the second X-ray projection or information derived from the second X-ray projection
storing the first position and the second position, wherein the first position and the second position set the trajectory for the manipulator (18, 18a*, 18b*)
wherein the virtual input means (30) comprise augmented reality input means, at least one sensor glove and/or at least one pointer for marking a position in 3D space.

2. The method (100) in accordance with claim 1, wherein the X-ray system (10, 10*) is a CT system and the method comprises the step of starting (120) reconstructing the CT data set based on the first and second X-ray projections in order to obtain a partial CT data set; and wherein the step of representing (130) the first and second X-ray projections or the information derived from the first and second X-ray projections comprises representing the partial CT data set or information describing the partial CT data set; or
wherein the X-ray system (10, 10*) is a CT system and the method comprises the step of starting (120) reconstructing the CT data set based on the first and second X-ray projections in order to obtain a partial CT data set; and wherein the step of representing (130) the first and second X-ray projections or the information derived from the first and second X-ray projections comprises representing the partial CT data set or information describing the partial CT data set, and wherein the partial CT data set is an incomplete reconstruction or evaluation of the incomplete reconstruction in relation to a test task.

3. The method (100) in accordance with any of the preceding claims, wherein the information derived from the first and second X-ray projections or the information describing the partial CT data set are information relating to the resolution of the X-ray recording or the CT data set or information on the quality of the X-ray recording or the CT data set,

4. The method (100) in accordance with any of the preceding claims, the method (100) comprising the further steps of manually setting a further position for the X-ray system (10, 10*) by means of the virtual input means (30) and of recording the recording of the object (16) by means of the X-ray system (10, 10*) from the further position in order to obtain a further projection; or
the method (100) comprising the further steps of manually setting a further position for the X-ray system (10, 10*) by means of the virtual input means (30) and of recording the recording of the object (16) by means of the X-ray system (10, 10*) from the further position in order to obtain a further projection; and wherein the steps are repeated until the X-ray recording or the partial CT data set corresponds to a predetermined quality and/or resolution.

5. The method (100) in accordance with any of the preceding claims, wherein the method (100) comprises the step of moving to the first position before recording (115a) the recording from the first position, and wherein the method (100) comprises the step of moving to the second position before recording (115b) the recording from the second position.

6. The method (100) in accordance with any of the preceding claims, wherein the manipulator (18, 18a*, 18b*) comprises a robot or multi-element robot; and/or
wherein the first and/or second positions is/are defined by the position of the robot or by the positions of several elements of the multi-element robot; and/or
wherein the X-ray system (10, 10*) comprises two manipulators (18, 18a*, 18b*), wherein the first of the two manipulators (18, 18a*, 18b*) supports the X-ray source (12, 12*) and the second of the two manipulators (18, 18a*, 18b*) supports the X-ray detector (14, 14*), wherein the two manipulators (18, 18a*, 18b*) are movable independently of each other, and wherein the first position (18) and/or the second position (18') on the trajectory represent/s a combination of the positions of the two manipulators (18, 18a*, 18b*); and/or wherein the manipulator (18, 18a*, 18b*) is configured to move the object (16) and/or to move the object (16) relative to the X-ray source (12, 12*) and/or to the X-ray detector (14, 14*) in order to move to the first position (18) and/or the second position (18') on the trajectory.

7. The method (100) in accordance with any of the preceding claims, wherein the first and/or second position (18') of the trajectory is/are defined by the position of the X-ray source (12, 12*) and the X-ray detector (14, 14*) relative to the object (16) and/or relative to each other.

8. The method (100) in accordance with any of the preceding claims, wherein the virtual input means (30) comprise virtual reality input means, augmented reality input means, at least one sensor glove and/or at least one pointer for marking a position in 3D space.

9. The method (100) in accordance with any of the preceding claims, wherein the virtual input means (30) are formed by the manipulator (18, 18a*, 18b*) itself so that a manual movement of the manipulator (18, 18a*, 18b*) is interpreted to be an input.

10. The method (100) in accordance with any of the preceding claims, wherein one virtual input means is provided per manipulator.

11. The method (100) in accordance with any of the preceding claims, wherein the X-ray source (12, 12*) and the X-ray detector (14, 14*) are configured for permanent exposure to light.

12. The method (100) in accordance with any of the preceding claims, wherein recording the object (16) by means of the X-ray system (10, 10*) from the first and second positions is performed continuously; and representing (130) the first and second X-ray projections is performed as live recordings.

13. The method (100) in accordance with any of the preceding claims,
wherein the X-ray system (10, 10*) is a CT system and the method comprises the step of starting (120) reconstructing the CT data set based on the first and second X-ray projections in order to obtain a partial CT data set; and
wherein the step of representing (130) the first and second X-ray projections or the information derived from the first and second X-ray projections comprises representing the partial CT data set or information describing the partial CT data set;
wherein the method (100) comprises the further steps of manually setting a further position for the X-ray system (10, 10*) by means of the virtual input means (30) and of recording the recording of the object (16) by means of the X-ray system (10, 10*) from the further position in order to obtain a further projection;
wherein the steps are repeated until the X-ray recording or the partial CT data set corresponds to a predetermined quality and/or resolution.

14. A computer program comprising program code for performing the method steps of the method (100) in accordance with any of the preceding claims when the computer program (100) runs on an X-ray system (10, 10*).

## Revendications

1. Procédé (100) de commande d'un système de radiographie (10, 10*) qui comporte au moins un manipulateur (18, 18a*, 18b*), une source de rayons X (12, 12*) et un détecteur de rayons X (14, 14*), dans lequel le manipulateur (18, 18a*, 18b*) peut déplacer la source de rayons X (12, 12*), le détecteur de rayons X (14, 14*) ou un objet (16), aux étapes suivantes consistant à:
fixer manuellement (110a) une première position pour le manipulateur (18, 18a*, 18b*) sur une trajectoire au moyen de moyens d'entrée virtuels (30);
enregistrer (115a) la prise de vue de l'objet (16) au moyen du système de radiographie (10, 10*) à partir de la première position pour obtenir une première projection de radiographie;
représenter (130) la première projection de radiographie ou une information dérivée de la première projection de radiographie;
fixer manuellement (110b) une deuxième position sur la trajectoire au moyen des moyens d'entrée virtuels (30) à partir de la représentation de la première projection de radiographie ou d'une information dérivée de la première projection de radiographie;
enregistrer (115b) la prise de vue de l'objet (16) au moyen du système de radiographie (10, 10*) à partir de la deuxième position pour obtenir une deuxième projection de radiographie; et
représenter (130) la deuxième projection de radiographie ou une information dérivée de la deuxième projection de radiographie;
mémoriser la première et la deuxième position, où la première et la deuxième position fixent la trajectoire pour le manipulateur (18, 18a*, 18b*),
dans lequel les moyens d'entrée virtuels (30) comportent des moyens d'entrée de réalité augmentée (30), au moins un gant capteur et/ou au moins un élément de pointage destiné à marquer une position dans l'espace 3D.

2. Procédé (100) selon la revendication 1, dans lequel le système de radiographie (10, 10*) est un système de tomographie, et le procédé présente l'étape consistant à commencer (120) la reconstruction de l'ensemble de données de tomographie sur base de la première et de la deuxième projection de radiographie pour obtenir un ensemble de données de tomographie partiel; et dans lequel l'étape de représentation (130) de la première et de la deuxième projection de radiographie ou de l'information dérivée de la première et de la deuxième projection de radiographie comporte le fait de représenter l'ensemble de données de tomographie partiel ou une information décrivant l'ensemble de données de tomographie partiel; ou
dans lequel le système de radiographie (10, 10*) est un système de tomographie, et le procédé présente l'étape consistant à commencer (120) la reconstruction de l'ensemble de données de tomographie sur base de la première et de la deuxième projection de radiographie pour obtenir un ensemble de données de tomographie partiel; et dans lequel l'étape de représentation (130) de la première et de la deuxième projection de radiographie ou de l'information dérivée de la première et de la deuxième projection de radiographie comporte le fait de représenter l'ensemble de données de tomographie partiel ou une information décrivant l'ensemble de données de tomographie partiel, et dans lequel l'ensemble de données de tomographie partiel est une reconstruction incomplète ou une évaluation de la reconstruction incomplète en ce qui concerne une tâche d'examen.

3. Procédé (100) selon l'une des revendications précédentes, dans lequel l'information dérivée de la première et de la deuxième projection de radiographie ou l'information décrivant l'ensemble de données de tomographie partiel est une information relative à la résolution de la prise de vue de radiographie ou à l'ensemble de données de tomographie ou une information relative à la qualité de la prise de vue de radiographie ou à l'ensemble de données de tomographie.

4. Procédé (100) selon l'une des revendications précédentes, dans lequel le procédé (100) comporte les autres étapes consistant à fixer manuellement une autre position pour le système de radiographie (10, 10*) au moyen des moyens d'entrée virtuels (30) ainsi qu'à enregistrer la prise de vue de l'objet (16) au moyen du système de radiographie (10, 10*) à partir de l'autre position pour obtenir une autre projection; ou
dans lequel le procédé (100) comporte les autres étapes consistant à fixer manuellement une autre position pour le système de radiographie (10, 10*) au moyen des moyens d'entrée virtuels (30) ainsi qu'à enregistrer la prise de vue de l'objet (16) au moyen du système de radiographie (10, 10*) à partir de l'autre position pour obtenir une autre projection; et dans lequel les étapes sont répétées jusqu'à ce que la prise de vue de radiographie ou l'ensemble de données de tomographie partiel corresponde à une qualité et/ou résolution prédéterminée.

5. Procédé (100) selon l'une des revendications précédentes, dans lequel le procédé (100) comporte l'étape consistant à aborder la première position avant d'enregistrer (115a) la prise de vue à partir de la première position, et dans lequel le procédé (100) comporte l'étape consistant à aborder la deuxième position avant d'enregistrer (115b) la prise de vue à partir de la deuxième position.

6. Procédé (100) selon l'une des revendications précédentes, dans lequel le manipulateur (18, 18*a, 18b*) comporte un robot ou robot à plusieurs éléments; et/ou
dans lequel la première et/ou la deuxième position sont définies par la situation du robot ou par les situations des plusieurs éléments du robot à plusieurs éléments; et/ou
dans lequel le système de radiographie (10, 10*) comporte deux manipulateurs (18, 18*a, 18b*), dans lequel le premier des deux manipulateurs (18, 18a*, 18b*) porte la source de rayons X (12, 12*) et le deuxième des deux manipulateurs (18, 18a*, 18b*) porte le détecteur de rayons X (14, 14*), dans lequel les deux manipulateurs (18, 18*a, 18b*) sont déplaçables indépendamment l'un de l'autre, et dans lequel la première position (18) et/ou la deuxième position (18') représente sur la trajectoire une combinaison des positions des deux manipulateurs (18, 18*a, 18b*); et/ou dans lequel le manipulateur (18, 18*a, 18b*) est conçu pour déplacer l'objet (16) et/ou pour déplacer l'objet (16) par rapport à la source de rayons X (12, 12*) et/ou par rapport au détecteur de rayons X (14, 14*) pour aborder la première position (18) et/ou la deuxième position (18') sur la trajectoire.

7. Procédé (100) selon l'une des revendications précédentes, dans lequel la première et/ou la deuxième position (18') de la trajectoire est déterminée par la position de la source de rayons X (12, 12*) et du détecteur de rayons X (14, 14*) par rapport à l'objet (16) et/ou de l'un par rapport à l'autre.

8. Procédé (100) selon l'une des revendications précédentes, dans lequel les moyens d'entrée virtuels (30) comportent des moyens d'entrée de réalité virtuelle, des moyens d'entrée de réalité augmentée, au moins un gant capteur et/ou au moins un élément de pointage destiné à marquer une position dans l'espace 3D.

9. Procédé (100) selon l'une des revendications précédentes, dans lequel les moyens d'entrée virtuels (30) sont formés par le manipulateur (18, 18*a, 18b*) lui-même, de sorte qu'un déplacement manuel du manipulateur (18, 18*a, 18b*) s'entende comme entrée.

10. Procédé (100) selon l'une des revendications précédentes, dans lequel est prévu, par manipulateur, un moyen d'entrée virtuel.

11. Procédé (100) selon l'une des revendications précédentes, dans lequel la source de rayons X (12, 12*) et le détecteur de rayons X (14, 14*) sont conçus pour une exposition continue.

12. Procédé (100) selon l'une des revendications précédentes, dans lequel la prise de vue de l'objet (16) au moyen du système de radiographie (10, 10*) a lieu en continu depuis la première et la deuxième position; et la représentation (130) de la première et de la deuxième projection de radiographie a lieu comme une prise de vue en direct.

13. Procédé (100) selon l'une des revendications précédentes,
dans lequel le système de radiographie (10, 10*) est un système de tomographie, et le procédé présente l'étape consistant à commencer (120) la reconstruction de l'ensemble de données de tomographie sur base de la première et de la deuxième projection de radiographie pour obtenir un ensemble de données de tomographie partiel; et
dans lequel l'étape de représentation (130) de la première et de la deuxième projection de radiographie ou de l'information dérivée de la première et de la deuxième projection de radiographie comporte le fait de représenter l'ensemble de données de tomographie partiel ou une information décrivant l'ensemble de données de tomographie partiel;
dans lequel le procédé (100) comporte les autres étapes consistant à fixer manuellement une autre position pour le système de radiographie (10, 10*) au moyen des moyens d'entrée virtuels (30) ainsi qu'à enregistrer la prise de vue de l'objet (16) au moyen du système de radiographie (10, 10*) à partir de l'autre position pour obtenir une autre projection;
dans lequel les étapes sont répétées jusqu'à ce que la prise de vue de radiographie ou l'ensemble de données de tomographie partiel corresponde à une qualité et/ou résolution prédéterminée.

14. Programme d'ordinateur avec un code de programme pour réaliser les étapes du procédé (100) selon l'une des revendications précédentes lorsque le programme d'ordinateur (100) est exécuté sur un système de radiographie (10, 10*).
